# EUROPÄISCHE PATENTSCHRIFT

(11) **EP 1 685 889 B1**
(45) Veröffentlichungstag und Bekanntmachung des Hinweises auf die Patenterteilung: **08.06.2011**
(21) Anmeldenummer: 05109531.3
(22) Anmeldetag: 13.10.2005
(51) Int. Cl.: B01D 35/027, F01M 11/00

(54) **Filter für Ölwanne**
Oil sump filter
Filtre pour un carter d'huile

(30) Priorität: 28.01.2005 DE 102005004287
(43) Veröffentlichungstag der Anmeldung: 02.08.2006
(73) Patentinhaber: MANN+HUMMEL GmbH, 71638 Ludwigsburg (DE)
(72) Erfinder: Rohrmeier, Josef, 84082 Laberweinting (DE); Epli, Sven, 74172 Neckarsulm (DE); Amesöder, Dieter, 74321 Bietigheim (DE); Nicolas, Aude, 55413 Weiler (DE); Hüppchen, Claudia, 70176 Stuttgart (DE)

(56) Entgegenhaltungen:
- DE-A1- 4 240 656
- GB-A- 2 374 298
- US-A- 5 292 432
- US-A1- 2003 094 405
- US-A1- 2004 007 520
- US-B1- 6 539 912

## Beschreibung

### Stand der Technik

Die Erfindung betrifft eine Ölfiltereinheit, die in einem Ölsammelraum wie z. B. einer Ölwanne oder einem Gehäuse angeordnet ist. Derartige Ölfiltereinheiten werden beispielsweise zur Reinigung des Schmieröles von Getrieben z.B. Automatikgetrieben verwendet. Um die Filtereinheit an den Einbauraum anzupassen wird diese wannenförmig gestaltet und kann direkt im Ölsumpf positioniert werden. Aufgabe ist es Verunreinigungen aus dem Schmieröl abzusondern und somit die Standzeit des Schmieröles zu verlängern und den Verschleiß des zu schmierenden Aggregates zu minimieren. Dabei soll die Ölfiltereinheit bei größtmöglicher Filterfeinheit und minimalem Strömungswiderstand eine ausreichende Schmutzkapazität aufweisen und beispielsweise in Kraftfahrzeugen mit Automatikgetrieben für die gesamte Fahrzeuglebensdauer konzipiert sein.

Aus der GB 2 374 298 A ist ein in einer Ölwanne einer Brennkraftmaschine angeordneter Filter bekannt.

Aus der US 6,539,912 B1 ist eine Kunststoffölwanne für Motoren oder Getriebe mit einem saugseitigen und einem druckseitigen Ölfilter bekannt.

Aus der US 2003/094405 A1 ist ein Schmierölfilter bekannt, umfassend eine erste und eine zweite Gehäuseschale, wobei ein zwischen den Schalen verklemmtes Filterelement vorgesehen ist.

Aus der US 2004/007520 A1 ist eine Metallölwanne für Motoren oder Getriebe bekannt, wobei ein Ölfiltermedium zwischen dem Ölwannenboden und einer Plastikschale angeordnet ist.

Aus der US 5,292,432 A1 ist ein Flüssigkeitsfilter mit einem Gehäuse bekannt, welcher eine obere und eine untere Gehäuseschale sowie ein zwischen diesen angeordnetes Flachfilterelement umfasst.

Es ist aus der EP 1 238 693 eine Ölfiltereinheit bekannt, welche in einem wannenförmigen Gehäuse eine Filterkammer aufweist, die mit einem Öleinlass und einem Ölauslass korrespondiert. Innerhalb der Filterkammer ist ein durch Rippen gestütztes, austauschbares Filterelement angeordnet. Das hohlförmige Filterelement ist im Wesentlichen raumparallel zur Filterkammer angeordnet und wird von Außen nach Innen durchströmt.

Nachteilig an dieser Gestaltung ist, dass das austauschbare Filterelement an seinen gegenüberliegenden Stirnseiten aufgrund der Austauschbarkeit aufwendig gegenüber dem Gehäuse abgedichtet werden muss. Zu dieser Abdichtung sind am Filterelement und am Gehäuse korrespondierende Konturen erforderlich, die eine lösbare und dichte Verbindung erlauben. Die Herstellung dieser Konturen stellt hohe Anforderungen an den Fertigungsprozess. Weiterhin ist die Größe der Filteroberfläche direkt vom Umfang der Filterkammer abhängig, dies bedeutet eine starke Einschränkung hinsichtlich der Abstimmung von Schmutzkapazität und Filterfeinheit. Aufgrund dieser Einschränkung kann die beschriebene Ölfiltereinheit kein Filtermedium integriert werden, welches eine für den Betrieb von Automatikgetrieben notwendige Filterfeinheit gewährleistet. Ein Einsatz eines solchen Filtermediums würde den im Saugbetrieb geforderten Differenzdruck übersteigen. Um diese Anforderung zu erfüllen, wird in der Praxis saugseitig ein Grobpartikelfilter verwendet und druckseitig ein zusätzlicher Feinpartikelfilter nachgeschaltet.

Aufgabe der Erfindung ist es, eine einzige Ölfiltereinheit zu schaffen, welche bei einer hohen Filterfeinheit eine große Schmutzkapazität aufweist und dadurch eine lange Standzeit ermöglicht, beziehungsweise auf die Lebensdauer eines Fahrzeuggetriebes konzipiert werden kann. Weiterhin soll die Ölfiltereinheit einen geringen Druckverlust aufweisen, einfach und wirtschaftlich herstellbar sein und eine sichere Abdichtung des Filterelements gegenüber dem Gehäuse aufweisen.

Diese Aufgabe wird durch die Merkmale des Patentanspruches 1 gelöst.

### Vorteile der Erfindung

Die erfindungsgemäße Ölfiltereinheit zielt darauf ab ein Filtermedium zu verwenden, das den Raum innerhalb einer Filterkammer maximal nutzt und eine größtmögliche Filteroberfläche bildet. Dies wird dadurch erreicht, dass ein zick-zack-förmig gefaltetes Filtermedium verwendet wird. Aufgrund eines flachen, wannenförmigen Einbauraumes wird vorzugsweise ein flachförmig gefaltetes Filtermedium eingesetzt. Zur Abdichtung des Filtermediums gegenüber einem Gehäuse wird das Filtermedium von einem Rahmen umschlossen, welcher Dichtkonturen aufweist, die mit dem Gehäuse oder mit Dichtkonturen des Gehäuses korrespondieren. Der Rahmen kann beispielsweise aus Kunststoff wie Polyamid oder Polypropylen gebildet werden und im Spritzgußverfahren direkt um das Filtermedium angespritzt werden. Die angespritzte Dichtkontur kann beispielsweise ein Steg sein, der mit im Gehäuse eingeformten Nuten korrespondiert. Die Verbindung zwischen Filtermedium und Rahmen kann beispielsweise durch Kleben, Fügen oder Schweißen und insbesondere durch Vibrationsschweißen hergestellt sein. Der Rahmen bzw. die Dichtkontur kann auch aus PU-Schaum oder einem sonstigem aus dem Stand der Technik bekanntem Elastomer gebildet werden. Ein so gebildetes Flachfilterelement ist in Längsrichtung in das Gehäuse eingebracht und unterteilt dieses in eine untenliegende Roh- und eine oben liegende Reinseite. An der Rohseite des Gehäuses ist wenigstens ein Öleinlass angeordnet durch die das Öl aus dem Ölsumpf in das Gehäuse einströmt. An der Reinseite des Gehäuses ist ein Ölauslass angeordnet durch die das gefilterte Öl abströmt. Die Abströmung erfolgt vorzugsweise über einen Abströmstutzen der einstückig mit dem Gehäuse hergestellt ist.

Gemäß der Erfindung ist das Filtermedium aus Glasfasern gebildet. Durch die Verwendung von Glasfasermedien können hohe Anforderungen an die Filterfeinheit realisiert werden. Durch den hohen Schmelzpunkt der Medien ist auch ein Umspritzen des Filterrahmens problemlos möglich. Dadurch ist die Ölfiltereinheit in vorteilhafter Weise einfach und wirtschaftlich herstellbar und erreicht eine hohe effektive Filtrationsleistung.

Erfindungsgemäß werden Glasfasermedien verwendet, welche eine Filterfeinheit von weniger als 25 µm Porengröße aufweisen. Die dadurch erzielte Filtrationsfeinheit erlaubt es die Filtrationsleistung ohne eine zusätzliche Filtereinheit weiter zu steigern.

Weiter erfindungsgemäß wird das Filtermedium gegenüber dem Strömungsdruck stabilisiert, indem an der An- und/oder Abströmseite ein Stützgitter angebracht wird. Dieses Stützgitter liegt direkt an der An- und/oder Abströmseite des Filtermediums an und verläuft parallel zur zick-zack-förmigen Faltung. Das Stützgitter hat die Aufgabe das Filtermedium gegen den Anströmdruck des Öles mechanisch zu stabilisieren und ein ausschwemmen möglicher Faserteile aus dem Medium zu verhindern. Weiterhin kann das Stützgitter die Faltgeometrie des Filtermediums stabilisieren bzw. die Faltgeometrie selbst bilden. Als Material für das Stützgitter wird vorzugsweise Metall verwendet es kann aber auch ein temperaturfester Kunststoff oder ein stabiles Spinnvlies zum Einsatz kommen. An den Seitenflächen des Mediums kann das Gittergeflecht mit in den Rahmen eingespritzt sein, wodurch eine sichere Befestigung gewährleistet ist.

Durch Stützgitter wird das Filtermedium auf einfache Weise mechanisch zuverlässig stabilisiert wodurch das Medium selbst eine geringe Stabilität benötigt, günstig konzipiert und wirtschaftlich hergestellt werden kann.Die Einbringung des Filterelementes in das Gehäuse kann durch eine an einer Stirnseite angebrachte Einbauöffnung erfolgen. In diesem Fall kann am Rahmen ein Verschlussdeckel angeordnet sein der die Einbauöffnung verschließt. Die Befestigung kann dabei lösbar, z.B. durch Rastverbindungen oder unlösbar durch verschweißen oder verkleben ausgeführt werden. Zur Unterstützung der Dichtfunktion können an den korrespondierenden Dichtkonturen zwischen Verschlussdeckel und Gehäuse und/oder auch zwischen Rahmen und Gehäuse zusätzlich Dichtelemente wie beispielsweise Elastomere angebracht werden.

Der Vorteil der Erfindung ergibt sich durch die wesentlich vergrößerte Schmutzkapazität bei verringertem Differenzdruck des Filtermediums und gleichem Einbauraum. Dadurch steht genügend Schmutzkapazität für auftretende Grob- und Feinpartikel zur Verfügung und es kann auf einen zusätzlichen Ölfilter verzichtet werden. Die Anordnung eines mit dem Filtermedium fest verbundenen Rahmens, gewährleistet eine einfach und wirtschaftlich herstellbare, Dichtverbindung zwischen Filterelement und Gehäuse. Durch die große Filteroberfläche resultiert ein geringer Druckverlust, so dass der Filter saugseitig angeordnet werden kann und auf einen druckseitigen Feinfilter verzichtet werden kann.

Gemäß einer weiteren vorteilhaften Ausgestaltung ist das Gehäuse aus zwei Schalen gebildet, wobei zwischen einer Oberschale und einer Unterschale eine Trennebene in Längsrichtung des Filtergehäuses verläuft. Die Trennebene durchtrennt das Gehäuse vorzugsweise planförmig und umschließt das Filtermedium vollständig. An Ober- und Unterschale sind somit spiegelgleiche Trennflächen vorhanden. Im zusammengebauten Zustand korrespondieren die Dichtkonturen des Rahmens mit den Trennflächen und sind durch diese dichtend verbunden. Die Dichtkonturen des Rahmens können somit in der Trennebene angeordnet werden. Um diese Verbindung zu stabilisieren können die Gehäusewandungen an den Trennflächen verstärkt oder wulstförmig aufgeweitet sein. Die Trennflächen können beispielsweise durch Schrauben oder Clipverbindungen gegeneinander gespannt sein und dadurch eine Spannkraft mit den Dichtkonturen des Elementes herstellen. Die Dichtkontur kann sich sandwichartig über den gesamten Bereich der Trennfläche ausdehnen, oder in einem abgestuften Dichtprofil welches von den Trennflächen gebildet wird integriert sein.

Die Trennebene liegt am größten Umfangsbereich des Gehäuses, wodurch sich die beiden Gehäuseschalen in vorteilhafter Weise hinterschnittsfrei herstellen lassen. Dadurch sind alle Komponenten einfach und wirtschaftlich herstellbar, zusätzlich ergibt sich eine zuverlässige und prozesssichere Montage.

Die Verbindung der Dichtkontur des Rahmens wird in einer Ausgestaltung als unlösbare Verbindung ausgeführt. Die Dichtkonturen des Rahmens können mit den Trennflächen der Schalen beispielsweise verklebt oder verschweißt werden. Diese Verbindungsarten erlauben es auf zusätzliche Befestigungsteile und den dafür erforderlichen Raumbedarf zu verzichten. Unter Berücksichtigung der Schwingungs- und Temperaturbelastung der Verbindung stellt diese Ausgestaltung eine sehr kostengünstige und zuverlässige Verbindung dar.

In einer besonderen Ausführungsform der Erfindung ist zwischen der Rohseite und der Reinseite ein Umgehungsventil vorgesehen. Ventile dieser Art bestehen in der Regel aus Ventilkörper, Ventilsitz, Feder und einem Korb. Das vorzugsweise federbelastete Ventil, öffnet einen Strömungsquerschnitt zwischen Rohseite und Reinseite ab einer definierter Druckdifferenz von beispielsweise 0,4bar. Diese Situation kann dann eintreten, wenn das zu filternde Öl aufgrund tiefer Temperaturen noch sehr zähflüssig ist oder wenn das Filtermedium durch angeströmte Partikel einen erhöhten Strömungswiderstand aufweist. Der Einbauraum des Umgehungsventils lässt sich vorzugsweise in der Trennebene anordnen. Die Trennebene wird dazu über einen Bereich des Filtermediums hinaus verlängert, wodurch sich ein Ventilraum bildet. Im Ventilraum ist die Roh- von der Reinseite durch den Rahmen getrennt, wobei das Umgehungsventil eine kommunizierende Verbindung in Strömungsrichtung gewährleistet. Das Umgehungsventil kann dabei als separate Einheit in den Rahmen eingesetzt werden. Es ist jedoch auch möglich einen Ventilsitz in den Rahmen zu integrieren und die weiteren Ventilteile vor der Montage hinzuzufügen.

Das Umgehungsventil sichert die Ölversorgung in vorteilhafter Weise auch bei erhöhten Strömungswiderständen des Filterelementes. Durch die Anordnung in die Trennebene ist das Umgehungsventil bei minimalem Raumbedarf einfach und wirtschaftlich in die Ölfiltereinheit integrierbar.

Eine weitere vorteilhafte Ausführungsform ist mit einer Rücklaufsperre ausgestattet. Diese verhindert dass die Ölfiltereinheit beim Betriebsstillstand leer läuft und sichert beim Neustart des Getriebes eine sofortige Ölversorgung. Rücklaufsperren dieser Art werden vorzugsweise aus einer dünnwandigen Metall- Kunstoff- oder Elastomerplatte gebildet, welche einen Ventilsitz in eine Strömungsrichtung radial oder axial verschließen. Um möglichst die gesamte Ölmenge in der Ölfiltereinheit zurückzuhalten kann die Rücklaufsperre direkt am Öleinlass angeordnet werden.

Die Rücklaufsperre stellt vorteilhaft auch nach einem Betriebsstillstand eine schnelle Ölversorgung der Ölfiltereinheit sicher und kann bei geringem Raumbedarf in die Unterschale, Oberschale oder in den Rahmen integriert werden.

Es ist weiter vorteilhaft direkt am Öleinlass einen Vorfilter anzuordnen der grobe Verunreinigungen von der Ölfiltereinheit zurückhält. Dieser wird vorzugsweise aus einem einlagigem Siebgeflecht gebildet welches eine Maschenweite von ca. 0,4mm bis 0,8mm aufweist. Um mit einem einzigen Vorfilter sowohl Öleinlass als auch ein bereits erwähntes Umgehungsventil vor groben Partikeln zu schützen, kann der Öleinlass direkt neben den Ventilraum des Umgehungsventils positioniert werden. Der Vorfilter kann auch nur zum Schutz des Umgehungsventils an diesem angeordnet sein und dadurch ein völlig ungefiltertes Einströmen von Partikeln in den Ölkreislauf beim Öffnen des Umgehungsventiles verhindern. Zur Befestigung kann der Vorfilter beispeilsweies geklebt, geklipst, geschraubt, geschweißt oder als Einlegeteil angespritzt oder mit eingespritzt werden.

Gemäß einer weiteren vorteilhaften Ausgestaltung der Erfindung erstreckt sich der Rahmen über eine vorgegebene Distanz zwischen der Ober- und der Unterschale der Ölfiltereinheit und bildet somit einen Teil der Gehäusewandung des Filtergehäuses. Der Rahmen kann die Höhe des Filtermediums auch überragen. Dadurch entsteht an den, den Schalen zugewandten Seiten des Rahmens ein flexibler Freiraum, der zur Anordnung von Befestigungskonturen genutzt werden kann. Diese Konturen können zur Befestigung der Ölfiltereinheit in einer Einbaustruktur oder zur Befestigung der Ober- bzw. der Unterschale am Rahmen genutzt werden. So ist es beispielsweise möglich, Konturen für eine Vibrationsschweißung oder eine Spiegelschweißung am Rahmen anzuordnen. Der zur Vibrationsschweißung erforderliche Freiraum kann ebenfalls berücksichtigt werden. Durch die Höhe des Rahmens können auch weitere Funktionsteile wie das Umgehungsventil, eine Rücklaufsperre, oder ein Vorfilter in den Rahmen integriert werden oder einstückig mit dem Rahmen hergestellt sein. Der Rahmen kann den Anforderungen entsprechend auch als 2 Komponenten Bauteil mit unterschiedlichen Materialien hergestellt sein.

Vorteilhaft erlaubt es dieser Rahmen wesentliche Funktionselemente zu integrieren und die Verbindung zwischen den Schalen zuverlässig und wirtschaftlich herzustellen.

Gemäß einer weiteren vorteilhaften Gestaltung sind am Filtergehäuse Konturen zur Befestigung der Ölfiltereinheit in einem Einbauraum eines Getriebes vorgesehen. Diese Konturen können dabei als flache Stege, ösenförmige Ausbuchtungen, Stifte oder clipsähnliche Haken, sowie andere aus dem Stand der Technik bekannte Befestigungsformen aufweisen. Die Befestigungskonturen können an der Unterschale, an der Oberschale oder an der Trennebene angeordnet sein. Da die Wandungsdicke im Bereich der Trennebene sinnvollerweise verstärkt ausgeführt ist und auch noch durch die Dichtkontur des Filterelementes verstärkt sein kann, eignet sich dieser Bereich besonders für die Anordnung von Befestigungskonturen. Diese korrespondieren vorzugsweise mit Befestigungselementen des Getriebegehäuses und sichern die Position der Ölfiltereinheit.

Besonders vorteilhaft ist dabei, dass die Befestigung der Ölfiltereinheit optimal mit dem Einbauraum und dem Einbauvorgang abgestimmt werden kann, wodurch sich eine besonders günstige und wirtschaftliche Befestigung und Montage ermöglicht.

In einer weiterführenden Ausführungsform sind am Ölauslass Konturen zur Verbindung mit einem Ansaugflansch einer Ölpumpe angeordnet. Das gefilterte Öl strömt vorzugsweise über einen Ölabströmstutzen, welcher an der Oberschale angeordnet ist weiter zu einer Ölpumpe. Zur Verbindung mit einem Flansch der Ölpumpe sind am Ölabströmstutzen Konturen angebracht. Diese können z.B. als Ringbund, Ringnut, als eine Rastkontur oder als eine beliebige aus dem Stand der Technik bekannte Befestigungskontur für Rohrstutzen ausgeführt sein.

Dadurch entsteht der Vorteil dass die gesamte Ölfiltereinheit an die Einbausituation angepasst werden kann und der Aufwand für die Verbindung mit der Ölpumpe minimiert wird.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1a bis 1c: Eine Ölfiltereinheit Explosionsdarstellung,
- Figur 2: eine zusammengebaute Ölfiltereinheit im Vollschnitt,
- Figur 2a und 2b: vergrößerte Detailausschnitte gemäß der Bereiche x und Y der Fi- gur 2,
- Figur 3a bis 3c: eine weitere Variante der Ölfiltereinheit in Explosionsdarstellung,
- Figur 4a und 4b: eine alternative Ausgestaltung der Ölfiltereinheit in perspektivischer Darstellung.

### Beschreibung der Ausführungsbeispiele

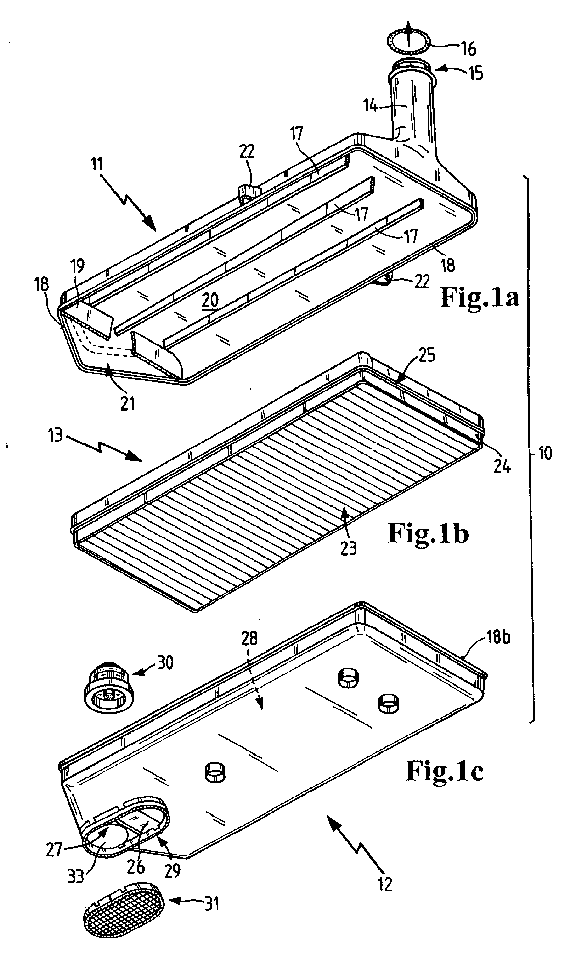

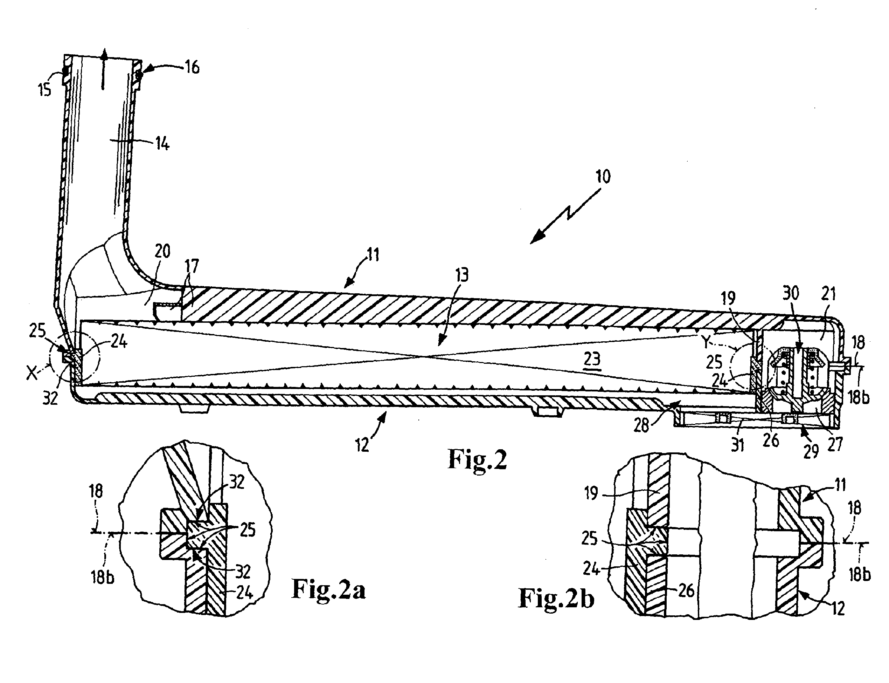

Die Figuren 1a bis 1c zeigen eine Ölfiltereinheit 10 in Explosionsdarstellung wobei die einzelnen Bauteile in Montagerichtung angeordnet sind. Dabei ist zwischen einer in Figur 1a gezeigten Oberschale 11 und einer in Figur 1c gezeigten Unterschale 12 ein Filterelement 13 in Figur 1b gezeigt. Ein Zmgehunsventil 30 und ein Vorfilter 31 sind im zusammengebauten Zustand (Figur 2) mit der Unterschale 12 verbunden.

Die Oberschale 11 bildet eine Gehäusehälfte des zweiteiligen Gehäuses und weist an der oberen Seite einen rohrförmigen Ölabströmstutzen 14 auf, an welchem, auf seiner abströmseitigen Stirnseite, eine Radialnut 15 zur Aufnahme eines O-Ringes 16 angeordnet ist. In Längsrichtung der Oberschale 11 sind auf der unteren, dem Filterelement 13 zugewandten Seite, Rippen 17 angeformt, welche die Oberschale 11 versteifen und in einem zusammengebautem, in der Figur 2 dargestellten Zustand, eine Abstützung des Filterelementes 13 bilden. Die untere, schalenförmige Öffnung der Oberschale 11, wird im gesamten Umfang von der planförmigen Trennfläche 18 umschlossen. Innerhalb der Oberschale 11 ist eine Stützwand 19 angeordnet, welche eine erste Reinseite 20 von einer zweiten Reinseite 21 trennt.

Das Filterelement 13 besteht aus einem flachförmigen Filtermedium 23, das an seinen Seitenflächen von einem Rahmen 24 umschlossen ist. Das Filtermedium 23 ist zick-zack-förmig gefaltet, wobei die Stirnkanten der Falten vollständig vom Rahmen 24 überdeckt sind. Die Längsseiten der Falten sind ebenfalls dichtend mit dem Rahmen 24 befestigt, wodurch das Filtermedium 23 über den gesamten Umfang im Rahmen 24 dichtend eingefasst ist. Der Rahmen 24 weist über seinen gesamten Umfang eine stegförmige Dichtkontur 25 auf.

Die Unterschale 12 weist eine, zur Trennfäche 18 der Oberschale hin, spiegelbildliche Trennfläche 18b auf. Die Unterschale 12 bildet einen Rohraum 28, der durch eine querstehende Trennwand 26 von einem Ventilraum 27 getrennt ist. Korrespondierend mit dem Ventilraum 27 ist ein zylindrischer Ventilflansch 33 angeordnet der zur Aufnahme des Umgehungsventiles 30 vorgesehen ist. Der an der Unterseite angeformte Öleinlass 29 bildet eine ovale Kontur die im Bereich der Trennwand 26 angeordnet ist und dadurch mit dem Rohraum 28 und dem Ventilraum 27 korrespondiert. Das unterhalb des Öleinlasses 29 gezeigte Vorfilter 31 korrespondiert durch seine Umfangskontur mit dem Öleinlass 29 und hält in eingebautem Zustand Grobpartikel zurück. Seitlich an der Oberschale 11 angeordnete Befestigungskonturen 22 dienen zur Befestigung des Ölfilterelementes 10 in einem Einbauraum.

Figur 2, 2a und 2b zeigen die zusammengebaute Ölfiltereinheit 10, an welchem das Filterelement 13 zwischen Oberschale11 und Unterschale 12 dichtend eingefasst ist. Die Figur 2a zeigt den Ausschnitt x der Figur 2 und die Figur 2b zeigt den Ausschnitt y der Figur 2. Die Dichtkonturen 25 des Rahmens 24 sind zwischen den Trennflächen 18, 18b eingefügt, diese weisen korrespondierend zu den Dichtkonturen 25 Dichtabsätze 32 auf. Zwischen dem Rohraum 28 und der zweiten Reinseite 21 ist eine Trennwand 26 angeordnet, welche den Rohraum 28 über die Dichtkontur 25 des Filterelementes 13 von der zweiten Reinseite 21 abtrennt. Die Stirnseite der Trennwand 26 ist dabei in einer Ebene mit den Trennflächen 18, 18b. Die Verbindung zwischen den Trennflächen 18, 18b und zwischen den Absätzen 32 und der Dichtkontur 25 kann beispielsweise geklebt oder verschweißt sein. Alternativ kann die Dichtkontur 25 beispielsweise auch über den gesamten Bereich der Trennflächen 18,18b ausgebildet sein, so dass auf die Absätze 32 verzichtet werden kann und die Dichtkontur 25 sandwichartig zwischen planförmigen Trennflächen 18, 18b liegt. In Längsrichtung der Ölfiltereinheit 10 bildet sich, ein vom Filterelement 13 abgetrennter Ventilraum 27, in dem das Umgehungsventil 30 angeordnet ist. Das Umgehungsventil 30 ist dabei dichtend im Venilraum 27 eingefasst und korrespondiert auf der unteren Seite mit dem Öleinlass 29 und auf der oberen Seite mit der zweiten Reinseite 21. Zwischen erster Reinseite 20 und zweiter Reinseite 21 ist eine strömungsdurchlässige Stützwand 19 angeordnet die die Dichtkontur 25 nur abstützt und einen Durchströmung zulässt (siehe Figur 1). Um eine dichte Verbindung des Ölabströmungsstutzens 14 zu einer nicht dargestellten Anschlusskontur zu bilden, ist der Ö-Ring 16 in die Radialnut 15 eingefügt.

Das durch den Öleinlaß 29 angesaugte Öl wird durch das, in der Unterschale 12 angebrachte Vorfilter 31 von groben Partikeln gereinigt. Das Öl strömt durch das Filtermedium 23 wodurch sich dieses in Strömungsrichtung wölbt und von den Rippen 17 abgestützt wird. Im weiteren Verlauf strömt das Öl durch den Ölabströmstutzen 14 zu einer nicht dargestellten Ölpumpe. Ist das Filtermedium 23 stark verschmutzt oder das Öl aufgrund niedriger Temperaturen zu dickflüssig, so öffnet sich infolge des erhöhten Differenzdrukkes das Umgehungsventil 30 wodurch die Ölversorgung gesichert bleibt.

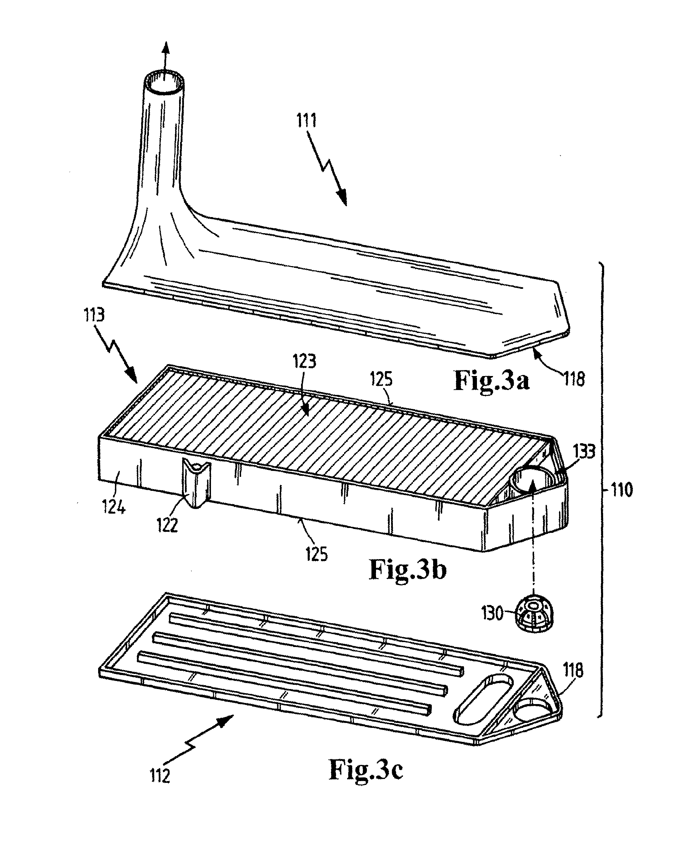

In den Figuren 3a bis 3c ist die Ölfiltereinheit 10 mit einem wesentlich höheren Rahmen 124 in Explosionsdarstellung dargestellt, welcher das Filtermedium 123 überragt. Dabei ist die Oberschale 111 in Figur 1a, die Unterschale in Figur 1c und das dazwischenliegende Filterelement 113 in Figur 1b gezeigt. Im Rahmen 124 ist ein Ventilflansch 133 angeformt, der zur Aufnahme des Umgehungsventiles 130 dient. Die Oberschale 111 und die Unterschale 112 sind im Wesentlichen planförmig geformt und weisen die Trennflächen 118 auf welche mit den Dichtflächen 125 des Rahmens korrespondieren. Die Befestigungskonturen 122 sind einstückig mit dem Rahmen 124 hergestellt und erlauben eine zentrale Befestigung in einer nicht dargestellten Einbaustruktur.

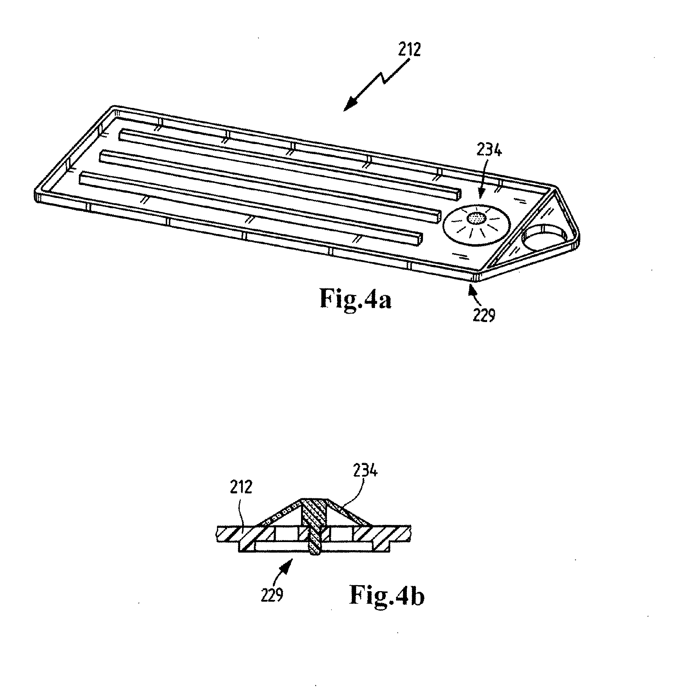

Die Figuren 4a und 4b zeigen eine Ausführungsform der Unterschale 212 an welcher ein Rückfluß des Öls verhindert wird. In Figur 4b ist dazu ein Ausschnitt des Bereiches des Öleinlasses 29 als Vollschnitt durch die Unterschale 212 gezeigt. In dieser Ausführung ist das Rücklaufsperrventil 234 als schirmförmiges Ventil in die Unterschale 212 eingeknöpft. Als Material kommt ein temparatur und chemisch beständiges Elastomer wie beispielswiese Silikon zur Auswahl.

## Patentansprüche

1. Ölfiltereinheit (10), angeordnet im Ölsumpf eines Ölkreislaufes für ein Automatikgetriebe einer Brennkraftmaschine , aufweisend ein Filtergehäuse in welchem eine Filterkammer angeordnet ist, wobei das Filtergehäuse korrespondierend zur Filterkammer einen Öleinlass (29) und einen Ölauslass (14) aufweist, wobei,
zwischen Öleinlass und Ölauslass ein Filterelement dichtend im Gehäuse befestigt ist, wobei
das Filtergehäuse wenigstens zweiteilig ist und dass das Filterelement (13) ein gefaltetes Filtermedium aufweist, welches von einem Rahmen (24) dichtend umschlossen ist, wobei der Rahmen Dichtkonturen (25) aufweist welche korrespondierend zu Konturen des Filtergehäuses ausgestaltet sind, wobei das Filtermedium ein Glasfasermedium ist und eine Filterfeinheit von weniger als 25 µm Porengröße aufweist und wobei das Filtermedium an einer Anströmseite und / oder einer Abströmseite durch ein Stützgitter verstärkt ist.

2. Ölfiltereinheit nach einem der vorhergehenden Ansprüche, **dadurch gekennzeichnet, dass** das Gehäuse aus zwei Schalen (11, 12) gebildet ist, wobei zwischen den Schalen (11, 12) eine Trennebene (18a, 18b) vorhanden ist, die zu Dichtkonturen (25) des Filterelementes (13) korrespondiert.

3. Ölfiltereinheit nach Anspruch 2, **dadurch gekennzeichnet, dass** die Schalen (11, 12) an der Trennebene (18a, 18b) mit der Dichtkontur des Rahmens unlösbar verbunden sind.

4. Ölfiltereinheit nach einem der vorhergehenden Ansprüche, **dadurch gekennzeichnet**, das zur Umgehung des Filterelementes (13) zwischen Öleinlass (29) und Ölauslass (14) ein Umgehungsventil (30) angeordnet ist.

5. Ölfiltereinheit nach einem der vorhergehenden Ansprüche, **dadurch gekennzeichnet, dass** im Bereich des Öleinlasses (29) eine Rücklaufsperre (234) angeordnet ist.

6. Ölfiltereinheit nach einem der vorhergehenden Ansprüche, **dadurch gekennzeichnet, dass** am Öleinlass (29) ein Vorfilter (31) angeordnet ist.

7. Ölfiltereinheit nach einem der vorhergehenden Ansprüche, **dadurch gekennzeichnet, dass** sich der Rahmen (24) über die Höhe des Filterelementes (13) erstreckt und einen Teil des Filtergehäuses bildet.

8. Ölfilterelement nach einem der vorhergehenden Ansprüche, **dadurch gekennzeichnet, dass** am Filtergehäuse oder am Rahmen Befestigungskonturen zur Befestigung des Filtergehäuses in einem Einbauraum vorgesehen sind.

9. Ölfilterelement nach einem der vorhergehenden Ansprüche, **dadurch gekennzeichnet, dass** am Ölauslass (14) Konturen zur Verbindung mit einem Ansaugflansch einer Ölpumpe angeordnet sind.

## Claims

1. Oil filter unit (10) disposed in the oil sump of an oil circuit for an automatic transmission of an internal combustion engine, featuring a filter housing in which a filter chamber is disposed, the filter housing featuring correspondingly to the filter chamber an oil inlet (29) and an oil outlet (14), a filter element being sealingly attached in the housing between the oil inlet and the oil outlet, the filter housing being made at least of two parts and the filter element (13) featuring a pleated filter medium which is sealingly enclosed by a frame (24), the frame featuring sealing contours (25) which are designed correspondingly in relation to the contours of the filter housing, the filter medium being a glass fiber medium and featuring a filter porosity with a pore size of less than 25 µm and the filter medium being reinforced at one on-flow side and / or one off-flow side by a supporting grid.

2. Oil filter unit according to claim 1, **characterized in that** the housing is made of two shells (11, 12), a parting plane (18a, 18b) which corresponds with the sealing contours (25) of the filter element (13) existing between the shells (11, 12)

3. Oil filter unit according to claim 2, **characterized in that** the shells (11, 12) are connected non-detachably with the sealing contour of the frame at the parting plane (18a, 18b).

4. Oil filter unit according to one of the above claims, **characterized in that** a bypass valve (30) is disposed between the oil inlet (29) and the oil outlet (14) for bypassing the filter element (13).

5. Oil filter unit according to one of the above claims, **characterized in that** a return stop (234) is disposed in the area of the oil inlet (29).

6. Oil filter unit according to one of the above claims, **characterized in that** a prefilter (31) is disposed at the oil inlet (29).

7. Oil filter unit according to one of the above claims, **characterized in that** the frame (24) extends over the height of the filter element (13) and forms one part of the filter housing.

8. Oil filter element according to one of the above claims, **characterized in that** fixing contours are provided at the filter housing or at the frame for fixing the filter housing in an installation space.

9. Oil filter element according to one of the above claims, **characterized in that** contours for connecting with an intake flange of an oil pump are disposed at the oil outlet (14).

## Revendications

1. Unité de filtre à huile (10) disposée dans le carter d'huile d'un circuit d'huile pour une transmission automatique d'un moteur à combustion interne, présentant un boîtier de filtre dans lequel est disposée une chambre de filtration, le boîtier de filtre présentant, en correspondance avec la chambre de filtration, une entrée d'huile (29) et une sortie d'huile (14), un élément filtrant étant fixé de façon étanche dans le boîtier entre l'entrée d'huile et la sortie d'huile, le boîtier de filtre étant formé d'au moins deux parties et l'élément filtrant (13) présentant un milieu filtrant plié qui est entouré de façon étanche par un cadre (24), le cadre présentant des contours d'étanchéité (25) qui sont exécutés de manière correspondante aux contours du boîtier de filtre, le milieu filtrant étant un milieu en fibres de verre et présentant une finesse avec une taille de pores de moins de 25 µm et le milieu filtrant étant renforcé par une grille d'appui d'un côté d'admission et/ou d'un côté d'écoulement.

2. Unité de filtre à huile selon la revendication 1, **caractérisé en ce que** le boîtier est constitué de deux coquilles (11, 12), un plan de séparation (18a, 18b) correspondant aux contours d'étanchéité (25) de l'élément filtrant (13) étant présent entre les coquilles (11, 12).

3. Unité de filtre à huile selon la revendication 2, **caractérisé en ce que** les coquilles (11, 12) sont fixées de manière inamovible au contour d'étanchéité du cadre au niveau du plan de séparation (18a, 18b).

4. Unité de filtre à huile selon l'une des revendications précédentes, **caractérisé en ce qu'**une soupape de dérivation (30) est disposée entre l'entrée d'huile (29) et la sortie d'huile (14) en vue de contourner l'élément filtrant (13).

5. Unité de filtre à huile selon l'une des revendications précédentes, **caractérisé en ce qu'**un dispositif anti-retour (234) est disposé dans la zone de l'entrée d'huile (29).

6. Unité de filtre à huile selon l'une des revendications précédentes, **caractérisé en ce qu'**un pré-filtre (31) est disposé à l'entrée d'huile (29).

7. Unité de filtre à huile selon l'une des revendications précédentes, **caractérisé en ce que** le cadre (24) s'étend au-dessus de la hauteur de l'élément filtrant (13) et forme une partie du boîtier de filtre.

8. Elément de filtre à huile selon l'une des revendications précédentes, **caractérisé en ce que** des contours de fixation sont prévus sur le boîtier de filtre ou sur le cadre afin de fixer le boîtier de filtre dans un espace de montage.

9. Elément de filtre à huile selon l'une des revendications précédentes, **caractérisé en ce que** des contours destinés à l'assemblage avec une bride d'aspiration d'une pompe à huile sont disposés sur la sortie d'huile (14).
